Europäisches Patentamt

European Patent Office

Office européen des brevets

(19)

(11) **EP 1 522 861 A1**

(12) ## DEMANDE DE BREVET EUROPEEN

(43) Date de publication:
**13.04.2005 Bulletin 2005/15**

(51) Int Cl.⁷: $G01P\ 3/80$

(21) Numéro de dépôt: **04292067.8**

(22) Date de dépôt: **20.08.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **24.09.2003 FR 0311201**

(71) Demandeur: **Peugeot Citroen Automobiles S.A.**
**78140 Vélizy Villacoublay (FR)**

(72) Inventeurs:
• **Gouriet, Pascal**
  **92320 Chatillon (FR)**
• **Djama, Zahir**
  **75015 Paris (FR)**

(74) Mandataire: **Berger, Helmut**
**Cabinet WEINSTEIN**
**56 A, rue du Faubourg Saint-Honoré**
**75008 Paris (FR)**

(54) **Méthode d'évaluation de la vitesse longitudinale d'un véhicule à partir de mesures caractérisant le comportement vertical des roues, et véhicule automobile associé**

(57) L'invention concerne une méthode d'évaluation de la vitesse longitudinale d'un véhicule automobile, ce véhicule comprenant une caisse (10) et des premières roues avant et arrière (21, 23) disposées l'une derrière l'autre.

Selon l'invention, la méthode comprend au moins les étapes suivantes :

1/ mesurer une grandeur caractérisant le comportement vertical de la première roue avant (21) ;
2/ mesurer ladite grandeur pour la première roue arrière (23) ;

3/ estimer le retard (T) de la grandeur mesurée pour la première roue arrière (23) par rapport à la grandeur mesurée pour la première roue avant (21) ;
4/ estimer la vitesse longitudinale (VL) du véhicule en fonction du retard (T) estimé à l'étape 3/ et de l'empattement du véhicule.

Une fonction de corrélation est calculée sur une durée glissante, entre les grandeurs échantillonnées pour la première roue arrière (23), et les grandeurs échantillonnées pour la première roue avant (21) affectées d'un retard. Le retard du maximum de ladite fonction est déterminé.

Fig.3

**EP 1 522 861 A1**

## Description

L'invention concerne en général les véhicules automobiles.

Plus précisément, l'invention concerne, selon un premier aspect, une méthode d'évaluation de la vitesse longitudinale d'un véhicule automobile, ce véhicule comprenant une caisse et des premières roues avant et arrière disposées l'une derrière l'autre.

Les méthodes de mesure de vitesse connues de l'art antérieur utilisent le dispositif antiblocage de roue, et reposent sur la détection de la vitesse de rotation d'un marqueur fixé à la roue.

Ces méthodes présentent le défaut d'être imprécises, car il faut connaître parfaitement le rayon sous charge du pneu pour transformer la vitesse de rotation de la roue en vitesse longitudinale. Ce rayon sous charge varie entre autre avec la pression du pneu et la charge du véhicule. Il change également quand un pneu usé est remplacé par un pneu neuf.

Par ailleurs, lorsqu'une roue glisse ou se bloque, la méthode n'est plus utilisable. Il faut alors mettre en place des stratégies d'estimation prenant en compte les autres roues.

Dans ce contexte, la présente invention a pour but de pallier les défauts mentionnés ci-dessus, et de proposer une autre méthode d'évaluation de la vitesse longitudinale du véhicule qui pourra être utilisée en redondance de celles utilisant le dispositif antiblocage.

A cette fin, la méthode de l'invention, par ailleurs conforme à la définition générique qu'en donne le préambule ci-dessus, est essentiellement caractérisée en ce qu'elle comprend au moins les étapes suivantes :

    1/ mesurer une grandeur caractérisant le comportement vertical de la première roue avant ;

    2/ mesurer ladite grandeur pour la première roue arrière ;

    3/ estimer le retard de la grandeur mesurée pour la première roue arrière par rapport à la grandeur mesurée pour la première roue avant ;

    4/ estimer la vitesse longitudinale du véhicule en fonction du retard estimé à l'étape 3/ et de l'empattement du véhicule.

Dans un mode de réalisation possible de l'invention, la grandeur mesurée est choisie parmi l'accélération verticale au centre roue, la vitesse verticale au centre roue, la vitesse verticale de la caisse, la vitesse verticale relative caisse-roue, la position verticale du centre roue, la position verticale de la caisse, la position relative caisse-roue, et l'effort vertical entre la caisse et la roue.

Avantageusement, la méthode comprend une étape 2'/d'estimation de ladite grandeur pour la première roue avant ou arrière en fonction des mesures effectuées aux étapes 1/ et 2/, cette grandeur estimée étant utilisée pour l'étape 3/.

De préférence, l'étape 3/ est effectuée en échantillonnant les grandeurs mesurées et/ou estimées pour les premières roues avant et arrière avec une période prédéterminée, en calculant sur une durée glissante la fonction de corrélation entre les grandeurs échantillonnées pour la première roue arrière et les grandeurs échantillonnées pour la première roue avant affectées d'un retard, et en déterminant le retard du maximum de ladite fonction de corrélation.

Par exemple, les étapes 3/ et 4/ sont effectuées une première fois en calculant ladite fonction de corrélation sur une durée relativement plus longue et en estimant une vitesse moyennée, et une seconde fois en calculant ladite fonction de corrélation sur une durée relativement plus courte et en estimant une vitesse instantanée, la vitesse longitudinale du véhicule étant déterminée à partir des vitesses moyennée et instantanée, par moyennage, cohérence ou toute autre méthode.

Avantageusement, la vitesse longitudinale du véhicule est déterminée en effectuant une moyenne pondérée des vitesses moyennée et instantanée affectées de coefficients de pondération, les coefficients de pondération étant variables en fonction des situations de vie du véhicule.

De préférence, la méthode est appliquée à un véhicule comprenant des secondes roues avant et arrière disposées l'une derrière l'autre, les premières et secondes roues étant situées respectivement de deux côtés latéraux opposés du véhicule, une première vitesse longitudinale étant déterminée en effectuant les étapes 1/ à 4/ pour les premières roues avant et arrière, une seconde vitesse longitudinale étant déterminée en effectuant les étapes 1/ à 4/ pour les secondes roues avant et arrière, la vitesse longitudinale du véhicule étant estimée en fonction des première et seconde vitesses longitudinale.

Par exemple, la méthode est appliquée à un véhicule comprenant des moyens pour mesurer au centre des premières roues avant et arrière des accélérations au centre roue verticale et longitudinale, et elle comprend les étapes suivantes :

    11/ déterminer une vitesse longitudinale directe à partir des accélérations longitudinales ;

    12/ déterminer une vitesse longitudinale indirecte à partir des accélérations verticales en appliquant les étapes 1/ à 4/ ;

13/ déterminer la vitesse longitudinale du véhicule en fonction des vitesses longitudinales directe et indirecte déterminées aux étapes 11/ et 12/.

Avantageusement, la vitesse longitudinale du véhicule est déterminée en effectuant une moyenne pondérée des vitesses directe et indirecte affectées de coefficients de pondération, les coefficients de pondération étant variables en fonction des situations de vie du véhicule.

Selon un second aspect, l'invention vise un véhicule automobile comprenant un dispositif de mesure de la vitesse longitudinale apte à mettre en oeuvre la méthode décrite ci-dessus.

Avantageusement, le véhicule comprend un capteur d'angle volant et/ou un organe de mesure de la vitesse de lacet, le dispositif de mesure de vitesse étant inhibé quand l'angle volant ou la vitesse de lacet sortent de plages respectives prédéterminées.

D'autres caractéristiques et avantages de l'invention ressortiront clairement de la description qui en est faite ci-dessous, à titre indicatif et nullement limitatif, en référence aux figures annexées, parmi lesquelles :

- les figures 1A et 1B sont des représentations schématiques, respectivement de côté et de dessus, d'un véhicule auquel est appliquée la méthode de l'invention,
- la figure 2 est une représentation schématique des accélérations verticales (en ordonnée) subies par les roues avant (Ar1) et arrière (Ar3) du véhicule de la figure 1, en fonction du temps (en abscisse),
- la figure 3 est un logigramme représentant les principales étapes de la méthode de l'invention,
- la figure 4 est un logigramme représentant les principales étapes d'une première variante de réalisation de la méthode de la figure 3,
- la figure 5 est un logigramme représentant les principales étapes d'une seconde variante de réalisation de la méthode de la figure 3,
- la figure 6 est un logigramme représentant les principales étapes d'une troisième variante de réalisation de la méthode de la figure 3,
- la figure 7 est un logigramme représentant les principales étapes d'une quatrième variante de réalisation de la méthode de la figure 3, et
- la figure 8 représente un logigramme détaillant l'étape 2'/ de la variante de la figure 7.

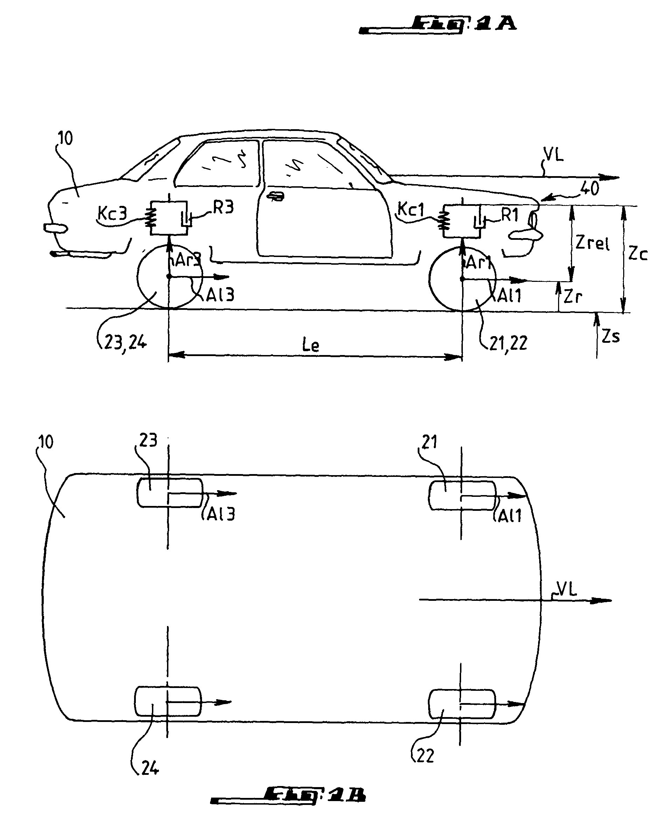

L'invention porte sur une méthode d'évaluation de la vitesse longitudinale d'un véhicule automobile. Ce véhicule, représenté sur les figures 1A et 1B, comprend une caisse 10, des premières roues avant et arrière 21 et 23 disposées l'une derrière l'autre d'un premier côté latéral du véhicule, et des secondes roues avant et arrière 22 et 24 disposées l'une derrière l'autre d'un second côté opposé au premier, les roues étant chacune liée à la caisse 10 par un dispositif de suspension 40.

Les roues avant et arrière sont espacées d'un empattement Le.

Selon l'invention, la méthode comprend au moins les étapes suivantes :

1/ mesurer une grandeur caractérisant le comportement vertical de la première roue avant 21 ;

2/ mesurer ladite grandeur pour la première roue arrière 23 ;

3/ estimer le retard T de la grandeur mesurée pour la première roue arrière 23 par rapport à la grandeur mesurée pour la première roue avant 21 ;

4/ estimer la vitesse longitudinale VL du véhicule en fonction du retard T estimé à l'étape 3/ et de l'empattement du véhicule Le.

La grandeur mesurée est choisie parmi l'accélération verticale au centre roue Ar, la vitesse verticale au centre roue Vr, la vitesse verticale de la caisse Vc, la vitesse verticale relative caisse-roue Vrel, la position verticale du centre roue Zr, la position verticale de la caisse Zc, la position relative caisse-roue Zrel, et l'effort vertical $\Sigma F$ entre la caisse et la roue.

De préférence, on utilise l'accélération verticale au centre roue Ar.

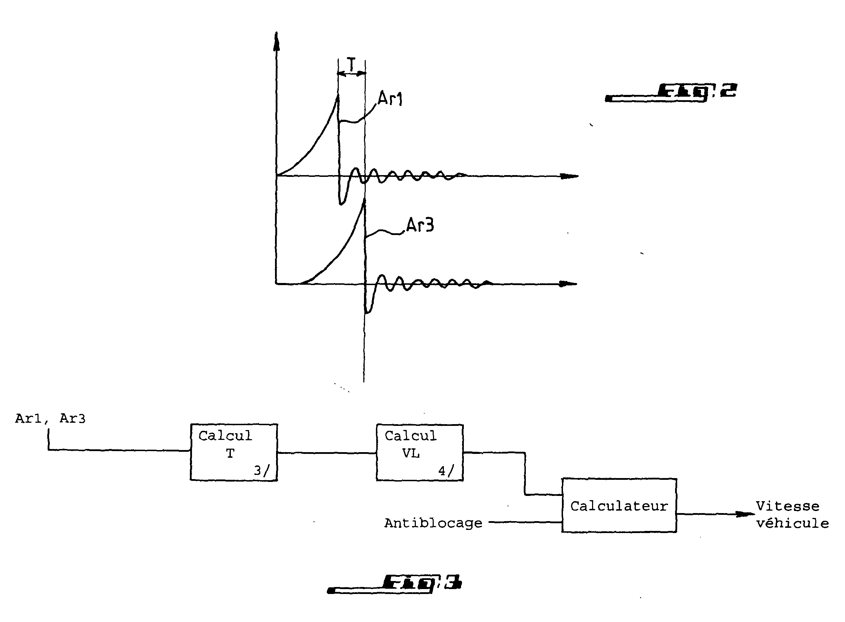

Comme le montre la figure 2, un événement qui est « vu » par la première roue avant 21 à un instant t, sera « vu » par la première roue arrière 23 à un instant t + T. Ainsi, une bosse sur la route se traduira par un pic d'accélération verticale pour la première roue avant 21, puis par un autre pic semblable au premier pour la première roue arrière 23, avec un décalage correspondant au retard T.

La vitesse VL du véhicule est déterminée très simplement, suivant l'équation :

$$VL = Le / T$$

Le retard T est déterminé à l'étape 3/, en échantillonnant les accélérations Ar1 et Ar3 mesurées pour les premières roues avant et arrière avec une période d'échantillonnage prédéterminée P, et en mettant les valeurs échantillonnées dans des mémoires tampons.

On calcule ensuite sur une durée D glissante la fonction de corrélation C entre d'une part les grandeurs Ar3 (i) échantillonnées pour la première roue arrière 23, et d'autre part les grandeurs Ar1(i) échantillonnées pour la première roue avant 21. La durée D est prise égale à N x P, avec N entier.

La fonction de corrélation est par exemple calculée selon l'équation suivante :

$$C(i) = \sum_{k=1}^{N} Ar1(k)\, x\, Ar3(k - i + N), \quad \texttt{pour i = 1 à 2 N.}$$

Le retard T correspond à la valeur de i qui maximise la fonction de corrélation C, avec i = P x T.

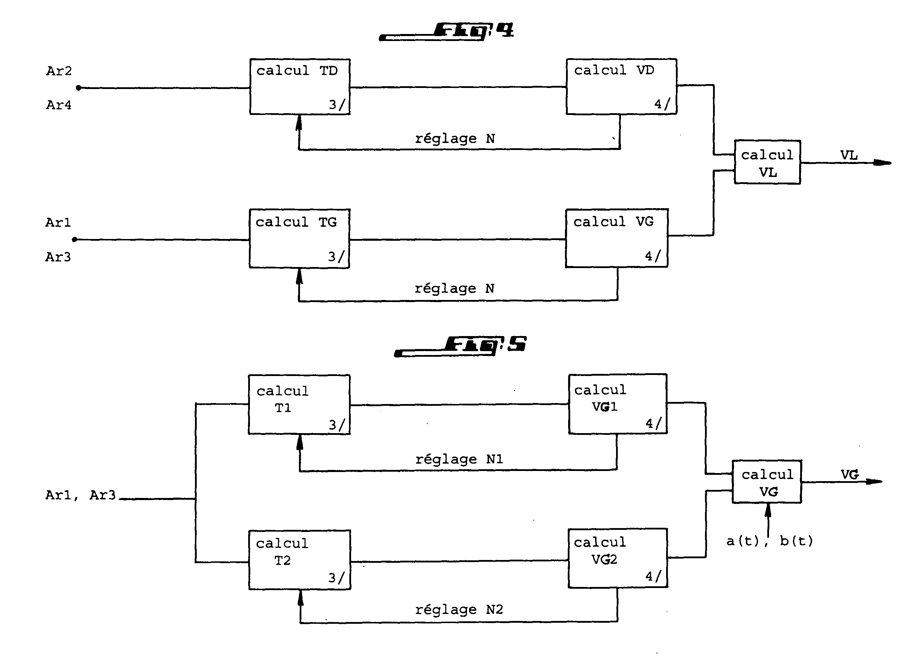

Quand le véhicule automobile est équipé d'un dispositif antiblocage de roue muni de capteurs de vitesses de roues et d'un calculateur, la vitesse longitudinale VL estimée est envoyée au calculateur, comme le montre la figure 3. Elle peut ainsi confirmer l'information fournie par les capteurs de vitesses de roues, suppléer à cette information en cas de défaillance des capteurs de vitesses de roues, ou encore corriger l'information fournie par ces capteurs en cas de glissement ou de blocage des roues.

On a décrit ci-dessus le cas où seules les accélérations verticales des roues disposées d'un premier côté du véhicule étaient utilisées pour calculer la vitesse longitudinale.

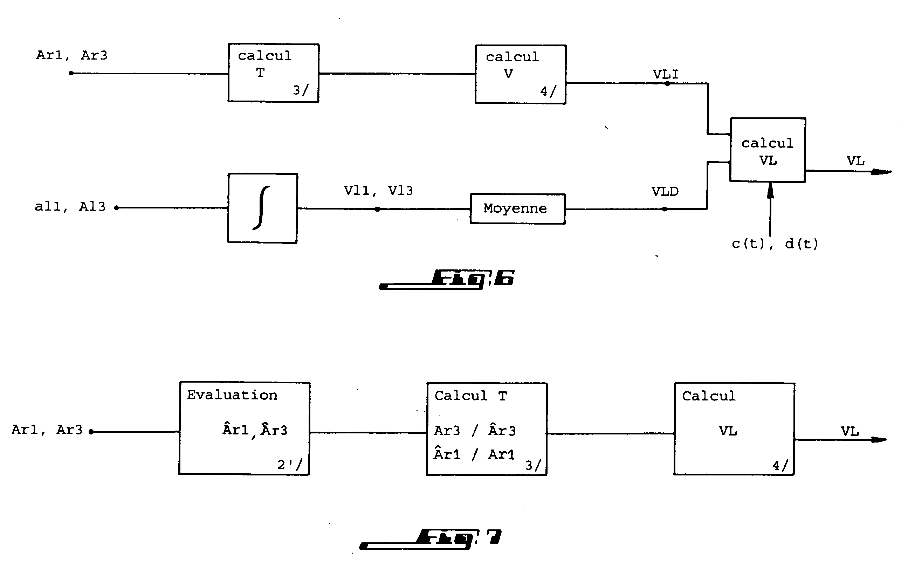

Dans une première variante de réalisation illustrée sur la figure 4, une première vitesse longitudinale VG est déterminée en effectuant les étapes 1/ à 4/ pour les premières roues avant et arrière 21 et 23, une seconde vitesse longitudinale VD étant déterminée en effectuant les étapes 1/ à 4/ pour les secondes roues avant et arrière 22 et 24, la vitesse longitudinale du véhicule VL étant estimée en fonction des première et seconde vitesses longitudinale VG et VD.

On calcule ainsi un premier retard TG de l'accélération verticale de la première roue arrière Ar3 sur l'accélération verticale de la première roue avant Ar1 en utilisant une durée de calcul N x P, puis on en déduit la première vitesse longitudinale VG.

On calcule un second retard TD de l'accélération verticale de la seconde roue arrière Ar4 sur l'accélération verticale de la seconde roue avant Ar2 en utilisant la même durée de calcul N x P, puis on en déduit la seconde vitesse longitudinale VD.

La vitesse longitudinale VL du véhicule est calculée très simplement, en faisant la moyenne arithmétique des première et seconde vitesses longitudinales VG et VD, soit :

VL = ( VG + VD ) / 2

La durée de calcul est ajustée en choisissant le paramètre N en fonction des première et seconde vitesse longitudinale VG et VD.

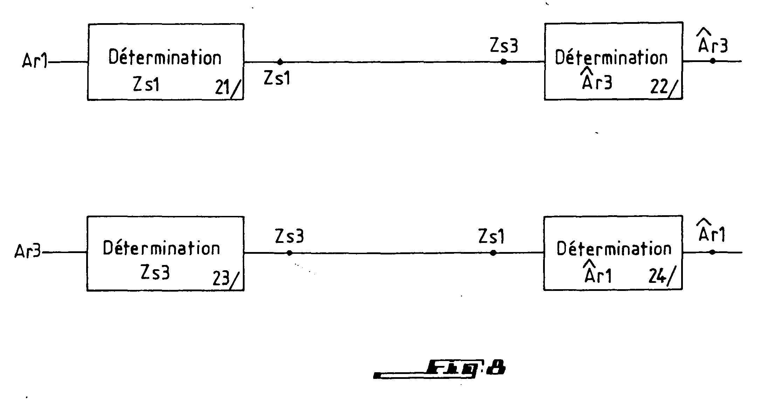

Dans une seconde variante de réalisation illustrée sur la figure 5, les étapes 3/ et 4/ sont effectuées, pour les premières roues avant et arrière 21 et 23, une première fois en calculant ladite fonction de corrélation C sur une première durée D1 relativement plus longue et en estimant une vitesse moyennée VG1, et une seconde fois en calculant ladite fonction de corrélation C sur une seconde durée D2 relativement plus courte et en estimant une vitesse instantanée VG2, la première vitesse longitudinale VG du véhicule étant déterminée en fonction des vitesses moyennée et instantanée VG1 et VG2 .

Plus précisément, on effectue l'étape 3/ une première fois avec une première durée glissante N1 x P, N1 étant par exemple supérieur à 100, et on en déduit un retard instantané T1. A l'étape 4/, on calcule une première vitesse instantanée VG1 à partir du retard instantané T1.

On effectue l'étape 3/ une seconde fois avec une seconde durée glissante N2 x P, N2 étant par exemple inférieur à 10, et on en déduit un retard moyenné T2. A l'étape 4/, on calcule une vitesse moyennée VG2 à partir du retard moyenné T2.

La première vitesse longitudinale VG du véhicule est alors déterminée en effectuant une moyenne pondérée des vitesses moyennée et instantanée VG1 et VG2 affectées de premier et second coefficients de pondération respectifs a et b, les coefficients de pondération a et b étant variables en fonction des situations de vie du véhicule.

On choisit donc :

$$VG = ( a \times VG1 + b \times VG2 ) / ( a + b )$$

La vitesse moyennée VG1 est représentative de la tendance générale de la vitesse longitudinale du véhicule. La vitesse instantanée VG2 est représentative des fluctuations dans cette tendance générale.

Les premier et second coefficients de pondération a et b sont variables de façon à permettre de privilégier l'une ou l'autre information en fonction de la situation courante du véhicule.

Ainsi, quand celui-ci roule en ligne droite, à vitesse stabilisée, la vitesse moyennée VG1 est privilégiée dans le calcul de la première vitesse longitudinale VG en choisissant le premier coefficient de pondération a très supérieur au second coefficient de pondération b, par exemple a = 10 x b.

Au contraire, en cas de freinage ou d'accélération, la vitesse instantanée VG2 est privilégiée dans le calcul de la première vitesse longitudinale VG en choisissant le premier coefficient de pondération a très inférieur au second coefficient de pondération b, par exemple b = 10 x a. Le choix de la relation entre les coefficients peut se faire par une détection de cohérence sur la vitesse instantanée.

Bien entendu, ce calcul peut être effectué pour les seules premières roues avant et arrière 21 et 23, et on prend alors la vitesse longitudinale VL du véhicule égale à la première vitesse longitudinale VG. Il peut également être effectué non seulement sur les premières roues avant et arrière 21 et 23 mais aussi sur les secondes roues avant et arrière 22 et 24. On détermine alors des vitesses moyennées et instantanées VD1 et VD2 pour les secondes roues avant et arrière 22 et 24 comme expliqué précédemment, et on utilise ces vitesses pour déterminer une seconde vitesse longitudinale VD, de la même façon qu'on détermine la première vitesse longitudinale VG.

La vitesse du véhicule VL est alors déterminée comme sur la figure 4, en effectuant une moyenne arithmétique des première et seconde vitesses longitudinales suivant la formule :

$$VL = (VD + VG) / 2.$$

Les paramètres N1 et N2 sont ajustés en fonction des vitesses moyennée et instantanée VL1 et VL2 calculées à la ou aux itérations précédentes.

Il est également possible de calculer une vitesse longitudinale véhicule moyennée VL1 à partir des première et seconde vitesses moyennées VG1 et VD1 selon la formule :

$$VL1 = (VG1 + VD1) / 2.$$

De même, on détermine une vitesse longitudinale véhicule instantanée VL2 à partir des première et seconde vitesses instantanées VG2 et VD2 selon la formule :

$$VL2 = (VG2 + VD2) / 2.$$

La vitesse longitudinale du véhicule est alors déterminée en effectuant une moyenne pondérée des vitesses longitudinales véhicules moyennées et instantanées selon la formule :

$$VL = (a \times VL1 + b \times VL2) / (a + b)$$

Les coefficients de pondération a et b sont choisis comme décrit ci-dessus.

Dans une troisième variante de réalisation, représentée sur la figure 6, la méthode est appliquée à un véhicule comprenant des moyens pour mesurer au centre des premières roues avant et arrière 21 et 23 des premières accélérations au centre roue verticale avant et arrière Ar1 et Ar3 et longitudinale avant et arrière Al1 et A13.

La méthode comprend alors les étapes suivantes :

11/ déterminer une vitesse longitudinale directe VLD à partir des accélérations longitudinales avant et arrière Al1 et Al3 ;

12/ déterminer une vitesse longitudinale indirecte VLI à partir des premières accélérations verticales avant et arrière Ar1 et Ar3 en appliquant les étapes 1/ à 4/ ;

13/ déterminer la vitesse longitudinale VL du véhicule en fonction des vitesses longitudinales directe et indirecte VLD et VLI déterminées aux étapes 11/ et 12/.

La vitesse longitudinale directe VLD est déterminée en intégrant d'abord les accélérations longitudinales avant et arrière AI1 et AI3 pour calculer des vitesses longitudinales directes avant et arrière V11 et V13, puis en faisant la moyenne arithmétique des vitesses longitudinales directes avant et arrière V11 et V13 selon la formule :

$$VLD = (Vl1 + Vl3) / 2$$

La vitesse longitudinale indirecte VLI est calculée en considérant une durée glissante relativement longue pour l'étape 3/, par exemple au moins dix fois la période P.

La vitesse longitudinale du véhicule VL est déterminée en effectuant une moyenne pondérée des vitesses directe et indirecte VLD et VLI affectées de troisième et quatrième coefficients de pondération c et d, ces coefficients de pondération étant variables en fonction des situations de vie du véhicule.

On choisit donc :

$$VL = (c \times VLD + d \times VLI) / (c + d)$$

La vitesse longitudinale directe VLD est représentative de la vitesse instantanée du véhicule. La vitesse longitudinale indirecte VLI est représentative de la vitesse pseudo-stabilisée du véhicule.

De même que pour la seconde variante de réalisation, quand le véhicule roule en ligne droite, à vitesse stabilisée, la vitesse indirecte VLI est privilégiée dans le calcul de la vitesse longitudinale VL en choisissant le quatrième coefficient de pondération d très supérieur au troisième coefficient de pondération c, par exemple d = 10 x c.

Inversement, en cas de freinage ou d'accélération, la vitesse directe VLD est privilégiée dans le calcul de la vitesse longitudinale VL en choisissant le quatrième coefficient de pondération d très inférieur au troisième coefficient de pondération, par exemple c = 10 x d.

Bien entendu, ce calcul peut être effectué pour les seules premières roues avant et arrière 21 et 23, ou être effectué également sur les secondes roues avant et arrière 22 et 24, la vitesse du véhicule étant alors déterminée comme sur la figure 4.

Selon une quatrième variante de réalisation représentée sur la figure 7, la méthode comprend une étape 2'/ d'estimation d'une grandeur estimée, typiquement une accélération verticale estimée, pour la première roue avant 21 et/ou arrière 23 en fonction des mesures effectuées aux étapes 1/ et 2/, cette ou ces grandeurs estimées étant utilisées pour l'étape 3/ à la place de la ou des accélérations mesurées.

On détermine à l'étape 2'/, par exemple, une première accélération verticale arrière estimée Âr3 au centre de la première roue arrière 23 à partir de la première accélération verticale avant Ar1, et on calcule à l'étape 3/ le retard T de l'accélération verticale Ar3 mesurée au centre de la première roue arrière 23 par rapport à la première accélération verticale arrière estimée Âr3. Ce retard est ensuite utilisé pour estimer la vitesse longitudinale du véhicule en appliquant l'étape 4/ telle que décrite plus haut.

Cette quatrième variante de réalisation est particulièrement avantageuse car elle permet de prendre en compte les cas où les roues avant et arrière répondent différemment à une même irrégularité de la route, par exemple parce que l'un des deux pneus est sous-gonflé ou parce que l'un des amortisseurs par lesquels la caisse est suspendue à ces roues est usé.

Dans ces cas, l'estimation du retard T par calcul du maximum de la fonction de corrélation C entre les accélérations verticales avant et arrière est très imprécise car les accélérations mesurées peuvent avoir des formes différentes.

Quand le véhicule est équipé de moyens de détection du sous-gonflage des pneus ou de l'usure de l'amortisseur, il est possible, à l'étape 2'/, de transformer la valeur mesurée de l'accélération verticale, pour la rendre apte à être utilisée à l'étape 3/ pour l'estimation du retard. Ainsi la première accélération verticale arrière Âr3 estimée à l'étape 2'/présente la même forme que l'accélération arrière mesurée Ar3 mais possède le même décalage temporel que la première accélération verticale avant mesurée Ar1 par rapport à l'accélération arrière mesuré Ar3.

L'estimation du retard T par calcul du maximum de la fonction de corrélation C entre les premières accélérations arrière avant estimée et mesurée Âr3 et Ar3 est précis puisque les deux accélérations ont la même forme.

L'étape 2'/ d'estimation de la première accélération verticale arrière estimée Âr3 au centre de la première roue arrière 23 comprend les sous-étapes suivantes, comme le montre la figure 8 :

21/ estimation de l'altitude du sol Zs1 sous la première roue avant 21 à partir de la première accélération verticale avant Ar1 mesurée au centre de la première roue avant 21 ;

22/ estimation de la première accélération verticale arrière Âr3 au centre de la première roue arrière 23 à partir de l'altitude du sol Zs1 sous la première roue avant 21 estimée à la sous-étape 21/ ;

On va maintenant décrire en détail les équations permettant de réaliser les sous-étapes 21/ et 22/. On utilise dans ces équations les transformées de Laplace des différentes grandeurs mesurées ou estimées.

Ces équations correspondent à une modélisation de la roue à deux degrés de liberté par exemple, dans laquelle la caisse est assimilée à une masse Mc suspendue à la roue de masse Mr (respectivement Mr1 et Mr3 pour les premières roues avant et arrière 21 et 23) par un ensemble ressort/amortisseur caractérisé par une raideur Kc et un coefficient d'amortissement R (respectivement Kc1/R1 et Kc3/R3 pour les premières roues avant et arrière 21 et 23).

Par ailleurs, les roues avant et arrière portent des pneus reposant sur le sol, assimilés à des ressorts de raideurs verticales Kp1 et Kp3 respectivement.

La roue et la caisse se déplacent selon une direction verticale et occupent des altitudes respectives fonction des variations d'altitude Zs du sol sous la roue.

La sous-étape 21/ est réalisée en utilisant les équations suivantes :

$$Zs1(p) = Ar1(p) / H'11(p)$$

$$H'11(p) = Kp1 \times (Mcp^4 + R1p^3 + Kc1p^2) / (Mr1Mcp^4 +$$

$$R1(Mc+Mr1)p^3 + Mr1Kc1 + Mc(Kc1+Kp1)p^2 + R1Kp1p + Kc1Kp1)$$

On divise donc la première accélération verticale avant Ar1 mesurée au centre de la première roue avant 21 par la valeur de la fonction H'11(p).

On assimile l'altitude du sol Zs3 sous la première roue arrière 23 à l'altitude du sol Zs1 sous la première roue avant 21 pour effectuer la sous-étape 22/.

La sous-étape 22/ est réalisée tout simplement en inversant la première équation utilisée à l'étape 21/ :

$$Âr3(p) = Zs3(p) \times (H'13(p))$$

$$H'13(p) = Kp3 (Mcp^4 + R3p^3 + Kc3p^2) / (Mr3Mcp^4 +$$

$$R3 Mc+Mr3)p^3 + Mr3Kc3 + Mc(Kc3+Kp3)p^2 + R3Kp3p + Kc3Kp3)$$

On multiplie donc l'altitude du sol Zs3 sous la première roue arrière 23 estimée à la sous-étape 21/ par la valeur de la fonction H'13(p).

On peut également estimer la première accélération verticale avant estimée Âr1 à l'étape 2'/ et calculer à l'étape 3/ le retard T de cette accélération corrigée par rapport à l'accélération verticale Ar1 mesurée au centre de la première roue avant 21.

Comme le montre la figure 8, l'étape 2'/ comprend alors les sous-étapes suivantes :

23/ estimation de l'altitude du sol Zs3 sous la première roue arrière 23 à partir de la première accélération verticale arrière Ar3 mesurée au centre de la première roue arrière 23 ;

24/ estimation de la première accélération verticale avant Âr1 au centre de la première roue avant 21 à partir de l'altitude du sol Zs3 sous la première roue arrière 23 estimée à l'étape 23/ ;

Ces sous-étapes 23/ et 24/ sont similaires aux sous-étapes 21/ et 22/ et ne seront pas décrites ici.

Les valeurs des différents paramètres intervenant dans ces calculs (R1, Kc1, Kp1, R3, K3, Kp3, Mc) sont considérés comme connus ou sont déterminés en temps réel par calcul ou cartographie, en fonction des moyens d'identification disponibles à bord du véhicule.

Cette méthode est destinée à être appliquée sur un véhicule automobile muni d'un dispositif de mesure de la vitesse longitudinale, ce dispositif comprenant, pour chaque roue, des organes de mesure de la grandeur caractérisant le comportement vertical de la roue, et des moyens de calcul de la vitesse longitudinale du véhicule en fonction des grandeurs mesurées par les organes de mesure, par exemple un calculateur embarqué.

Dans la seconde variante de réalisation de la méthode, le véhicule comprend pour chaque roue des organes de mesure des accélérations verticale et longitudinale, ces accélérations étant traitées par les moyens de calcul.

Dans le cas d'un véhicule à quatre roues, les organes de mesure peuvent équiper les quatre roues, ou seulement deux roues disposées d'un même côté.

La méthode peut également être appliquée à un véhicule à deux roues.

Enfin, le véhicule peut comprendre un capteur d'angle volant et/ou un organe de mesure de la vitesse de lacet, le dispositif de mesure de vitesse étant inhibé quand l'angle volant ou la vitesse de lacet sortent de plages respectives prédéterminées.

Le dispositif peut par exemple être inhibé quand le rayon de virage est inférieur à un seuil minimal, par exemple quarante mètres.

On comprend donc bien que la méthode de l'invention comprend beaucoup d'avantages. Elle permet d'obtenir une estimation de la vitesse longitudinale du véhicule indépendante et redondante de celle obtenue par le dispositif antiblocage de roue.

Elle peut suppléer à celle-ci quand les capteurs du dispositif antiblocage sont partiellement ou totalement hors service, ou quand les roues glissent ou se bloquent.

Elle permet de déterminer des informations adaptées à différentes utilisations par le système de pilotage du véhicule, par exemple une vitesse moyennée sur une durée relativement longue, ou une vitesse instantanée.

## Revendications

**1.** Méthode d'évaluation de la vitesse longitudinale d'un véhicule automobile, ce véhicule comprenant une caisse (10) et des premières roues avant et arrière (21, 23) disposées l'une derrière l'autre, la méthode comprenant au moins les étapes suivantes :

1/ mesurer une grandeur caractérisant le comportement vertical de la première roue avant (21) ;
2/ mesurer ladite grandeur pour la première roue arrière (23) ;
3/ estimer le retard (T) de la grandeur mesurée pour la première roue arrière (23) par rapport à la grandeur mesurée pour la première roue avant (21) ;
4/ estimer la vitesse longitudinale (VL) du véhicule en fonction du retard (T) estimé à l'étape 3/ et de l'empattement du véhicule,

**caractérisée en ce que** l'étape 3/ est effectuée en échantillonnant les grandeurs mesurées et/ou estimées pour les premières roues avant et arrière (21, 23) avec une période prédéterminée (P), en calculant sur une durée glissante (D) la fonction de corrélation entre d'une part les grandeurs échantillonnées pour la première roue arrière (23), et d'autre part les grandeurs échantillonnées pour la première roue avant (21) affectées d'un retard, et en déterminant le retard du maximum de ladite fonction de corrélation.

**2.** Méthode selon la revendication 1, **caractérisée en ce que** la grandeur mesurée est choisie parmi l'accélération verticale au centre roue (Ar), la vitesse verticale au centre roue (Vr), la vitesse verticale de la caisse (Vc), la vitesse verticale relative caisse-roue (Vrel), la position verticale du centre roue (Zr), la position verticale de la caisse (Zc), la position relative caisse-roue (Zrel), et l'effort vertical entre la caisse (10) et la roue.

**3.** Méthode selon la revendication 1 ou 2, **caractérisée en ce qu'**elle comprend une étape 2'/- d'estimation de ladite grandeur pour la première roue avant ou arrière (21, 23) en fonction des mesures effectuées aux étapes 1/ et 2/, cette grandeur estimée étant utilisée pour l'étape 3/.

**4.** Méthode selon l'une quelconque des revendications 1 à 3, **caractérisée en ce qu'**elle est appliquée à un véhicule comprenant des secondes roues avant et arrière (22, 24) disposées l'une derrière l'autre, les premières et secondes roues étant respectivement situées de deux côtés latéraux opposés du véhicule, une première vitesse longitudinale (VG) étant déterminée en effectuant les étapes 1/ à 4/ pour les premières roues avant et arrière (21, 23), une seconde vitesse longitudinale (VD) étant déterminée en effectuant les étapes 1/ à 4/ pour les secondes roues avant et arrière (22, 24), la vitesse longitudinale (VL) du véhicule étant estimée en fonction des première et seconde vitesses longitudinale (VG, VD).

**5.** Méthode selon l'une quelconques des revendications 1 à 4, **caractérisée en ce que** les étapes 3/ et 4/ sont effectuées une première fois en calculant ladite fonction de corrélation sur une durée relativement plus longue (D1) et en estimant une vitesse moyenne (VG1, VD1, VL1), et une seconde fois en calculant ladite fonction de corrélation sur une durée relativement plus courte (D2) et en estimant une vitesse instantanée (VG2, VD2, VL2), la vitesse longitudinale (VL) du véhicule étant déterminée en fonction des vitesses moyenne et instantanée (VG1, VD1, VL1 ; VG2, VD2, VL2).

**6.** Méthode selon la revendication 5, **caractérisée en ce que** la vitesse longitudinale (VL) du véhicule est déterminée en effectuant une moyenne pondérée des vitesses moyennée et instantanée (VD1, VD1, VL1 ; VG2, VD2, VL2) affectées de coefficients de pondération (a, b), les coefficients de pondération étant variables en fonction des situations de vie du véhicule.

**7.** Méthode selon l'une quelconque des revendications 1 à 6, **caractérisée en ce qu'**elle est appliquée à un véhicule comprenant des moyens pour mesurer au centre des premières roues avant et arrière (21, 23) des accélérations au centre roue verticale et longitudinale (Ar1, Ar3 ; Al1, Al3), et **en ce qu'**elle comprend les étapes suivantes :

11/ déterminer une vitesse longitudinale directe (VLD) à partir des accélérations longitudinales (Al1, Al3) ;
12/ déterminer une vitesse longitudinale indirecte (VLI) à partir des accélérations verticales (Ar1, Ar3) en appliquant les étapes 1/ à 4/ ;
13/ déterminer la vitesse longitudinale (VL) du véhicule en fonction des vitesses longitudinales directe et indirecte (VLD, VLI) déterminées aux étapes 11/ et 12/.

**8.** Méthode selon la revendication 7, **caractérisée en ce que** la vitesse longitudinale (VL) du véhicule est déterminée en effectuant une moyenne pondérée des vitesses directe et indirecte (VLD, VLI) affectées de coefficients de pondération (c, d), les coefficients de pondération étant variables en fonction des situations de vie du véhicule.

**9.** Véhicule automobile comprenant un dispositif de mesure de la vitesse longitudinale apte à mettre en oeuvre la méthode de l'une quelconque des revendications précédentes.

**10.** Véhicule selon la revendication 10, **caractérisé en ce qu'**il comprend un capteur d'angle volant et/ou un organe de mesure de la vitesse de lacet, le dispositif de mesure de vitesse étant inhibé quand l'angle volant ou la vitesse de lacet sortent de plages respectives prédéterminées.

Fig. 1A

Fig. 1B

Fig. 2

Ar1

I

Ar3

Fig. 3

Ar1, Ar3

Calcul
T
3/

Calcul
VL
4/

Calculateur

Vitesse
véhicule

Antiblocage

**Fig.4**

Ar2, Ar4 → calcul TD (3/) — réglage N — calcul VD (4/) → calcul VL → VL

Ar1, Ar3 → calcul TG (3/) — réglage N — calcul VG (4/) → calcul VL → VL

**Fig.5**

Ar1, Ar3 → calcul T1 (3/) — réglage N1 — calcul VG1 (4/) → calcul VG → VG

calcul T2 (3/) — réglage N2 — calcul VG2 (4/) → calcul VG

a(t), b(t) → calcul VG

Fig.6

Fig.7

Ar1 —— | Détermination Zs1 21/ | ——•Zs1 ——————•Zs3 —— | Détermination Âr3 22/ | —— •Âr3

Ar3 —— | Détermination Zs3 23/ | ——•Zs3 ——————•Zs1 —— | Détermination Âr1 24/ | —— •Âr1

Fig.8

14

**Office européen**

**des brevets**

**RAPPORT DE RECHERCHE EUROPEENNE**

Numéro de la demande

EP 04 29 2067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 301 130 A (ALCONE JERRY M ET AL) 5 avril 1994 (1994-04-05) | 1,2,4,9 | G01P3/80 |
| Y | * abrégé * * colonne 14, dernier alinéa; revendications 1-7 * ----- | 1,3-8,10 | |
| X | DE 34 35 866 A (BOSCH GMBH ROBERT) 10 avril 1986 (1986-04-10) | 1,2,4,9, 10 | |
| Y | * page 4, alinéa 3; revendications 1-4 * * page 7 * ----- | 3-8,10 | |
| X | EP 1 014 092 A (CIT ALCATEL) 28 juin 2000 (2000-06-28) | 1,2,10 | |
| Y | * abrégé * * alinéas [0005], [0008], [0011], [0015] * ----- | 3,7,8 | |
| X | DE 43 28 442 A (PHILIPS PATENTVERWALTUNG) 2 mars 1995 (1995-03-02) | 1,2,10 | |
| Y | * colonne 3, dernier alinéa - colonne 4, alinéa 1 * * colonne 5, alinéa 4 - colonne 5, dernier alinéa; revendications 1-6 * ----- | 3,10 | DOMAINES TECHNIQUES RECHERCHES (Int.Cl.7) G01P |
| Y | DE 40 14 756 A (CENITH SYSTEMS GMBH & CO KG) 21 novembre 1991 (1991-11-21) * colonne 4, alinéa 2; revendications 18,19 * ----- | 1 | |
| Y | DE 199 36 710 A (BOSCH GMBH ROBERT) 8 février 2001 (2001-02-08) * abrégé * * page 5, alinéa 2 - page 5, dernier alinéa * * colonne 9, alinéa 1 * * page 10, alinéa 4 - page 11, alinéa 3 * ----- -/-- | 4-6,8 | |

Le présent rapport a été établi pour toutes les revendications

| Lieu de la recherche | Date d'achèvement de la recherche | Examinateur |
|---|---|---|
| Munich | 14 décembre 2004 | Felicetti, C |

EPO FORM 1503 03.82 (P04C02)

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

**Office européen**

**des brevets**

## RAPPORT DE RECHERCHE EUROPEENNE

Numéro de la demande

EP 04 29 2067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 4 281 388 A (FRIEND KENNETH D ET AL) 28 juillet 1981 (1981-07-28) * abrégé; revendications 1-3 * ----- | 5,6 | |
| Y | US 5 670 872 A (VAN DE WALLE GERJAN F A ET AL) 23 septembre 1997 (1997-09-23) * abrégé * * colonne 4 * ----- | 3 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| Munich | 14 décembre 2004 | Felicetti, C |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
........................................................................
& : membre de la même famille, document correspondant

EPO FORM 1503 03.82 (P04C02)

**EP 1 522 861 A1**

ANNEXE AU RAPPORT DE RECHERCHE EUROPEENNE
RELATIF A LA DEMANDE DE BREVET EUROPEEN NO.

EP 04 29 2067

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-12-2004

| Document brevet cité au rapport de recherche | | Date de publication | Membre(s) de la famille de brevet(s) | | Date de publication |
|---|---|---|---|---|---|
| US 5301130 | A | 05-04-1994 | AUCUN | | |
| DE 3435866 | A | 10-04-1986 | DE | 3435866 A1 | 10-04-1986 |
| EP 1014092 | A | 28-06-2000 | DE | 19859646 A1 | 29-06-2000 |
| | | | EP | 1014092 A2 | 28-06-2000 |
| DE 4328442 | A | 02-03-1995 | DE | 4328442 A1 | 02-03-1995 |
| DE 4014756 | A | 21-11-1991 | DE | 4014756 A1 | 21-11-1991 |
| DE 19936710 | A | 08-02-2001 | DE | 19936710 A1 | 08-02-2001 |
| | | | BR | 0006992 A | 26-06-2001 |
| | | | WO | 0110689 A1 | 15-02-2001 |
| | | | EP | 1119479 A1 | 01-08-2001 |
| | | | JP | 2003506259 T | 18-02-2003 |
| | | | US | 6611781 B1 | 26-08-2003 |
| US 4281388 | A | 28-07-1981 | CA | 1127422 A1 | 13-07-1982 |
| US 5670872 | A | 23-09-1997 | DE | 69311635 D1 | 24-07-1997 |
| | | | DE | 69311635 T2 | 02-01-1998 |
| | | | EP | 0576070 A1 | 29-12-1993 |
| | | | JP | 3533230 B2 | 31-05-2004 |
| | | | JP | 6058764 A | 04-03-1994 |
| | | | KR | 9614225 B1 | 14-10-1996 |

EPO FORM P0460

Pour tout renseignement concernant cette annexe : voir Journal Officiel de l'Office européen des brevets, No.12/82